(19) Europäisches Patentamt

European Patent Office

Office européen des brevets

(11) **EP 1 004 856 A2**

(12) **EUROPEAN PATENT APPLICATION**

(43) Date of publication:
**31.05.2000 Bulletin 2000/22**

(51) Int. Cl.[7]: **G01F 1/68**

(21) Application number: **99122022.9**

(22) Date of filing: **12.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.11.1998 JP 32632398**

(71) Applicant: **Hitachi, Ltd.**
**Chiyoda-ku, Tokyo 101-8010 (JP)**

(72) Inventors:
- **Kanke, Atsushi**
  **Hitachi-shi, Ibaraki 319-1222 (JP)**
- **Yamada, Masamichi**
  **Hitachinaka-shi, Ibaraki 312-0002 (JP)**
- **Uchiyama, Kaoru**
  **Naka-gun, Ibaraki 319-2215 (JP)**

(74) Representative:
**Beetz & Partner**
**Patentanwälte**
**Steinsdorfstrasse 10**
**80538 München (DE)**

(54) **Thermal air flow meter**

(57)    In order to make a conventional heat-wire air-flow measuring device (20) precise when measuring pulsating air flows which have great pulsating amplitudes and partial counter flow, and to improve a narrow range of measurement and sensitive to stains and contamination in an air-flow measuring device (20) of a temperature difference detection type, a means (210) of measuring air-flow rates in the inlet passage of an internal combustion engine together with the direction of the air-flow is equipped with a first bridge circuit means consisting of heating resistors (211a, 211b) and temperature compensating resistors (211c) to drive at a fixed temperature, a second bridge circuit means for detecting the difference of emitted heats of the divided heating resistors (211a, 211b), and a means for adjusting the phase of the outputs from said two bridge circuits.

FIG. 1

## Description

BACKGROUND OF THE INVENTION

The present invention relates to a device for measuring air flow rates, more particularly, a thermal air-flow rate measuring device for measuring an intake amount of air for an internal combustion engine.

Conventionally, hot-wire type air-flow rate measuring devices have been used widely in electronically-controlled fuel injection systems for internal combustion engines of cars because they can directly detect mass air flows. However, this kind of air-flow measuring device is not so precise when measuring pulsating air flows which have great pulsating amplitudes and partial counter flows as in the case of low engine speeds and heavy loads of engines (of 4 cylinders or less). To improve precisions in such measurements, a new air-flow rate measuring device has been disclosed in Japanese Patent Application Laid-open No.62-821 (1987).

Japanese Patent Publication No.59-17371 (1984), USP 4,825,693, USP 5,369,994 and USP 5,681,989 disclose a method of correcting the quantity of a counter flow in the intake of air without detecting the flow of air. This method detects a counter flow component of an air flow and corrects the whole waveform to eliminate binary values. Japanese Patent Application Laid-open No.9-88711 (1997) has disclosed a method of correcting by software which detects an air flow rate as a voltage, linearizes it (or changes units), processes advances, detects a counter flow status, and thus corrects the quantity of the counter flow.

Further Japanese Patent Application Laid-open No.9-318412 (1997) has disclosed a method of providing heat detectors both in the upstream side and in the downstream side of a heat generating unit, detecting a flow velocity from the difference between temperatures detected by heat detectors during a constant-temperature operation, and directly obtaining an output corresponding to the orientation of the flow. This Patent Publication has also disclosed a method of detecting a flow velocity by adding a flow velocity signal obtained from the output of a temperature difference and a flow velocity signal obtained from the heater current supplied to the heat generating unit. However, these conventional methods have problems that the flow velocity signals have different phases and that the phase differences cause errors.

Japanese Patent Application Laid-open No.8-43161 (1996) has disclosed a method of providing heat resistors in parallel, measuring the average of resistances of the heated resistors, controlling the heating current by this average resistance, and thus obtaining a flow-rate output. Also in this case, however, the average value is not always equivalent to the actual flow rate momentarily. Namely, this method is not so precise in detection of a flow rate along the air flow.

When the inlet valve and the exhaust valve of a cylinder are overlapped with each other, an air flow generates from the exhaust valve to the inlet valve (at a positive pressure) as the piston goes up. This air flow is called a counter flow. When measuring this counter flow, a conventional heat-wire air flow meter outputs a positive flow velocity signal which indicates the absolute velocity value independently of whether the air flow is a forward flow or a counter flow. Therefore, this output signal is always greater than a true mean air-flow rate signal and the resulting measurement error is 30% to 100%.

The relationship between the output of a heat-wire probe and the air flow rate is expressed by the following (King's formula):

$$h \cdot Ih \cdot Rh = (C1 + C2\sqrt{Q})(Th - Ta) \qquad \text{(Formula 1)}$$

where Ih is a heat-wire current. Rh is a heat-wire resistance. This the surface temperature of the heat-wire. Ta is the temperature of the air. Q is a flow rate of the air. C1 and C2 are constants specific to the heat-wire. Generally, the sensor output is detected as a voltage which is the product of the heat-wire current Ih and the resistance. The engine control unit converts a voltage value output from the sensor into a flow rate value to control the engine according to the above formula.

Usually a heat-wire probe having a thick heat-wire or a big heat capacity is used as a sensor for measurement of air flow rates in a car to assure the reliability of measurement. However, this kind of air-flow meter has delays in response to dynamic changes of pulsating flows. This prevents precise measurement of pulsating waveforms of the engine.

It is possible to get an output considering the direction of the air flow by placing heat-sensitive resistors in both upstream and downstream sides of a heater having a heating element of a low heat capacitance on a silicon substrate and measuring the difference between the detected temperatures. However, when these heat-sensitive resistors are contaminated, their sensitivities will go down and the resulting flow-rate signal output will be influenced greatly. Further, to get a higher sensitivity, the temperature dependence of the heating resistor of the heater and the heat-sensitive resistor of the thermal sensor must be increased. For this purpose, the resistor films must be made up of materials having comparatively great temperature dependence such as platinum and nickel, which makes the manufacturing processes more complicated and consequently increases the manufacturing costs.

## SUMMARY OF THE INVENTION

One object of the present invention is to provide a simple thermal air flow meter which can measure air flow rates at a high precision even when the air flow is pulsating.

Said object can be attained by using a thermal air flow meter consisting of two resistors placed in the inlet air flow to an internal combustion engine and a bridge circuit for controlling the difference between voltages of said two resistors; wherein

said thermal air flow meter further contains a third resistor which is placed in said inlet air flow independently of said bridge circuit,

one of said resistors consists of a first resistor and a second resistor which is connected in series to said first resistor in said bridge circuit in the downstream side of said air flow and

an air flow rate signal which is output from said bridge circuit is corrected according to a potential difference across said first resistor, a potential difference across said second resistor, and a potential difference across said third resistor.

Said object can be attained by using a thermal air flow meter consisting of two resistors placed in the inlet air flow to an internal combustion engine and a bridge circuit for controlling the difference between voltages of said two resistors; wherein

one of said resistors consists of a first resistor and a second resistor which is connected in series to said first resistor in said bridge circuit in the downstream side of said air flow and an air flow rate signal which is output from said bridge circuit is corrected according to a potential difference across said first resistor, and a potential difference across said second resistor.

Said thermal air flow meter can obtain air flow rates in the direction of the air flow even when the air flow is pulsating, which increases the precision and range of measurement of air flows.

## BRIEF DESCRIPTION OF THE DRAWINGS

Fig. 1 is a schematic diagram of a thermal air flow meter which is the first embodiment of the present invention.

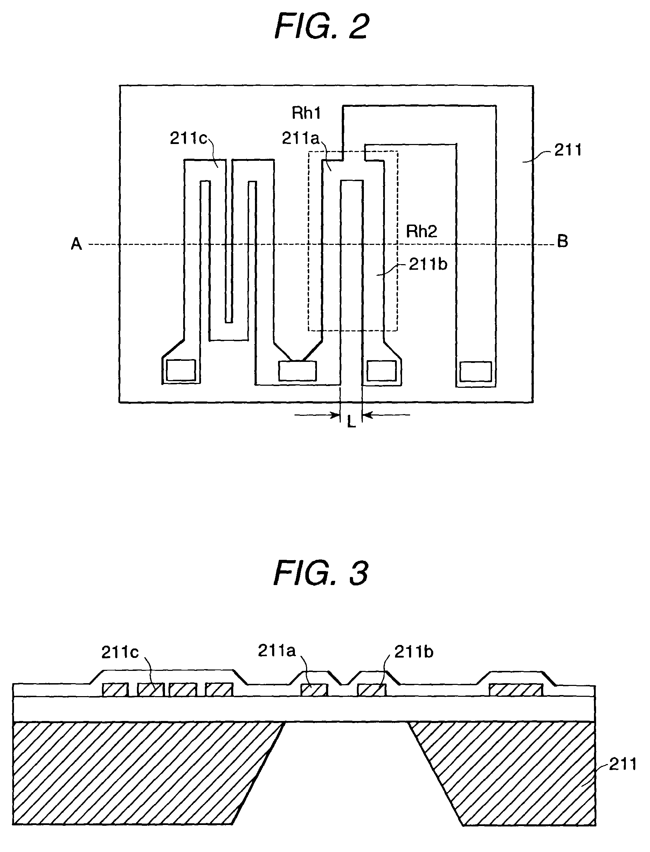

Fig. 2 is a pattern of a heating resistor unit which is the first embodiment of the present invention.
Fig. 3 is a sectional view of a heating resistor unit which is the first embodiment of the present invention.

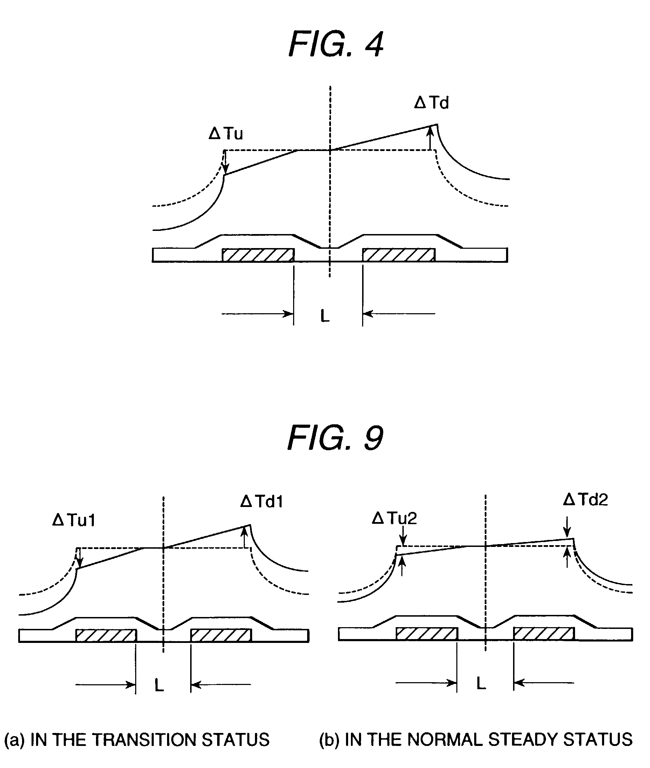

Fig. 4 is an explanatory drawing of heating of a heating resistor unit which is the first embodiment of the present invention.

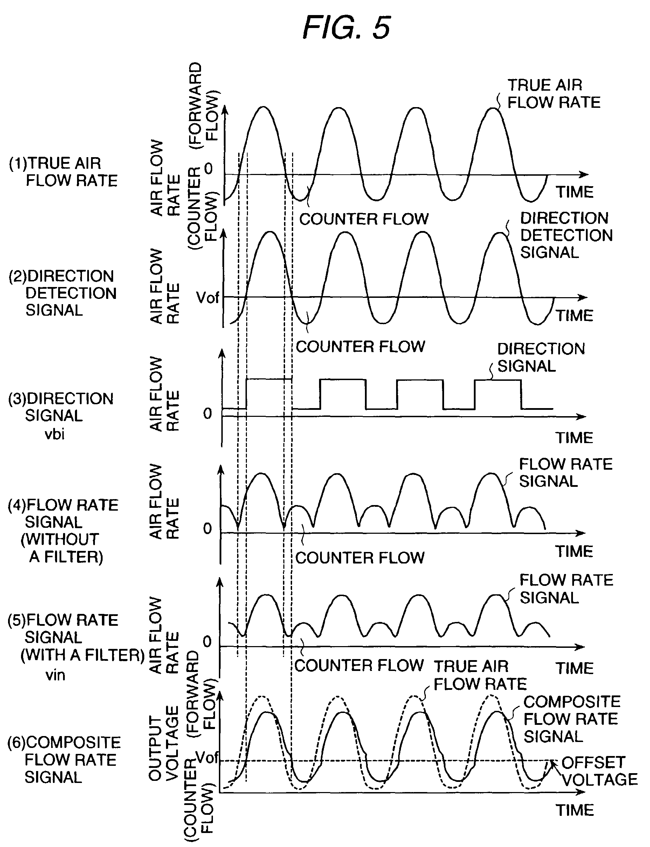

Fig. 5 shows operating waveforms of the first embodiment of the present invention.

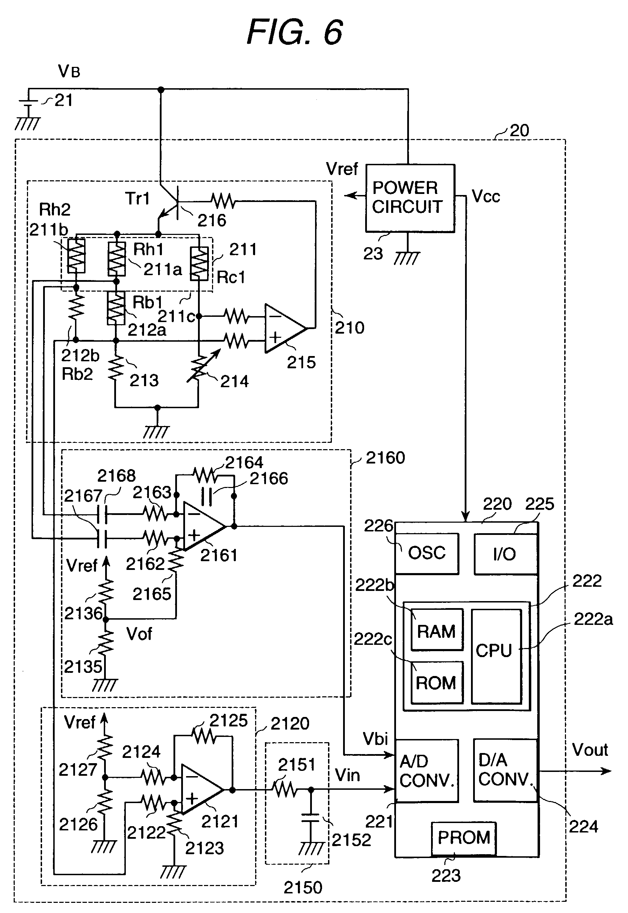

Fig. 6 is a schematic diagram of a thermal air flow meter which is the second embodiment of the present invention.

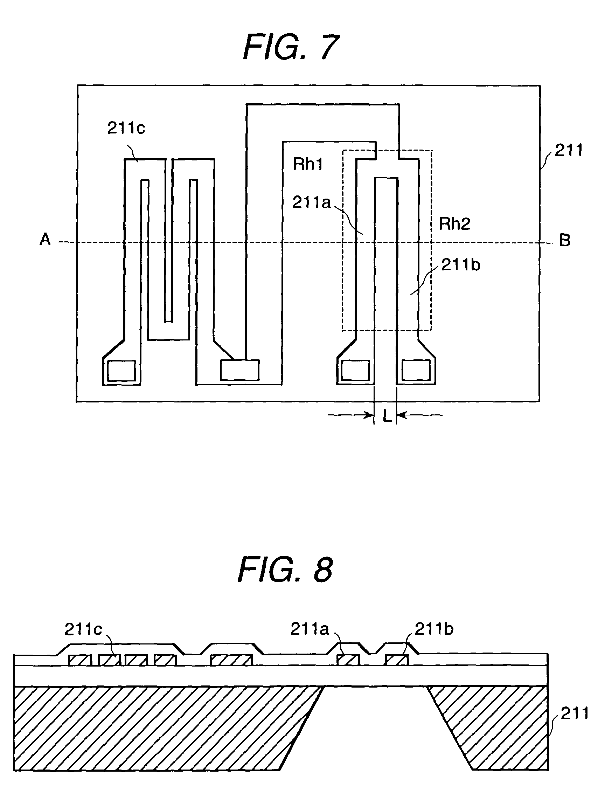

Fig. 7 is a pattern of a heating resistor unit which is the second embodiment of the present invention.
Fig. 8 is a sectional view of a heating resistor unit which is the second embodiment of the present invention.

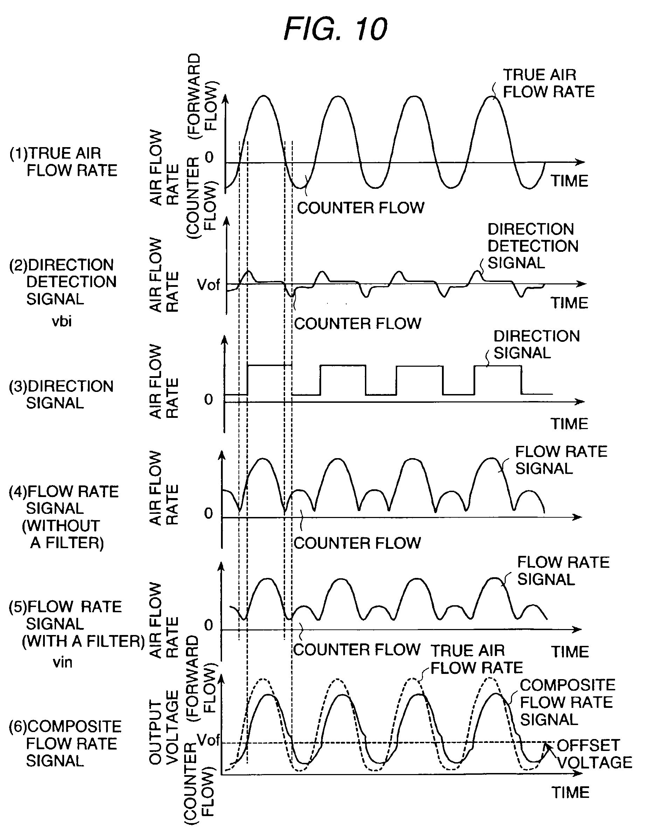

Fig. 9 is an explanatory drawing of heating of a heating resistor unit which is the second embodiment of the present invention.
Fig. 10 shows operating waveforms of the second embodiment of the present invention.

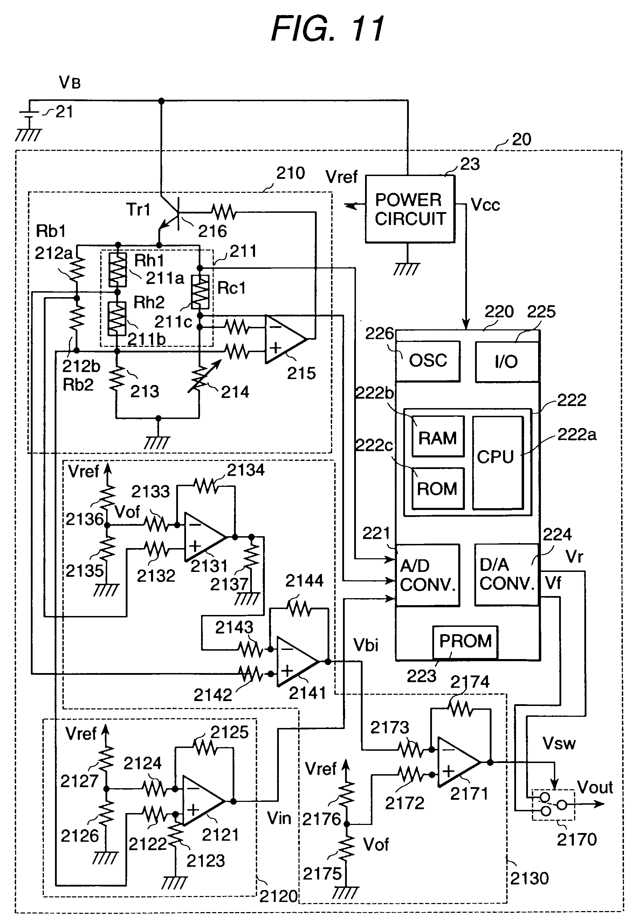

Fig. 11 is a schematic diagram of a thermal air flow meter which is the third embodiment of the present invention.
Fig. 12 shows operating waveforms of the third embodiment of the present invention.
Fig. 13 is a schematic diagram of a thermal air flow meter which is the fourth embodiment of the present invention.
Fig. 14 is a pattern of a heating resistor unit which is the fourth embodiment of the present invention.

## DETAILED DESCRIPTION OF THE PREFERRED EMBODIMENT

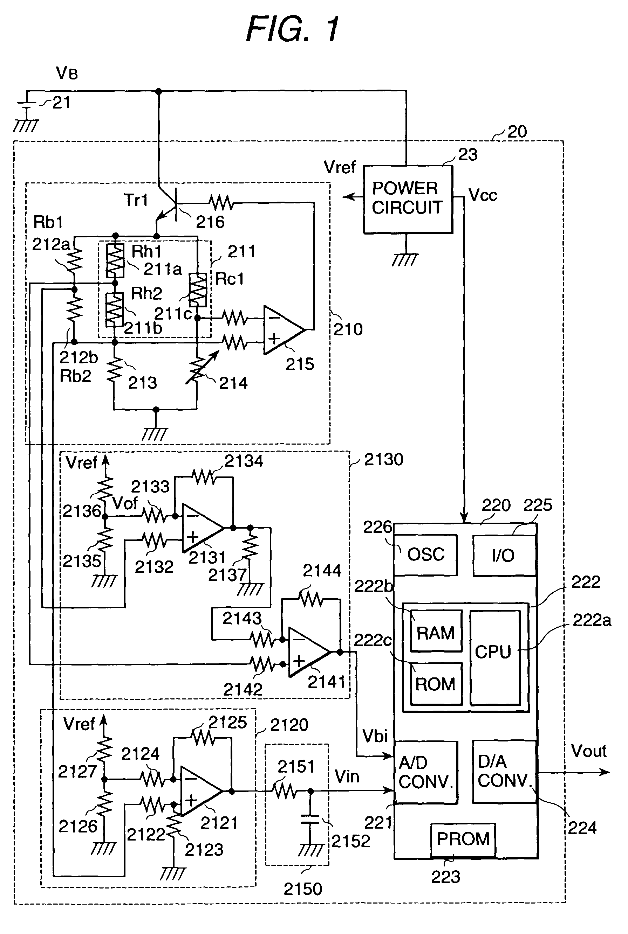

Referring to Fig. 1 which shows one embodiment of the present invention, below will be explained the configuration of a thermal air flow meter 20 in accordance with the present invention. A sensor circuit 210 constitutes a sensing part of said thermal air flow meter which is connected to a power supply 21, heats a heating resistor unit 211 to a preset temperature and measures the flow rate by heat which varies according to the rate of an air flow that deprives the heating unit of heat. The error correcting unit consisting of a microcomputer 220 receives a signal Vin from the sensor circuit 210, converts it into a digital value by the analog-to-digital converter (A/D converter) 221, corrects it by the arithmetic circuit 222 according to correction data which has been stored in writable memory 223, converts it into a digital value (equivalent to the output of the sensor circuit 210) by the digital-to-analog converter (D/A converter) 224, and outputs the result to the engine control unit. The error correcting unit consisting of the sensor circuit 210 and the microcomputer 220 constitutes the thermal air flow meter 20 together with a power circuit which generates a reference voltage.

Below is explained the detailed configuration of hardware of the first embodiment of the present invention. The sensor circuit 210 connected to the power supply 21 outputs a signal proportional to an air flow rate. The sensor circuit 210 consists of a Wheatstone bridge having heating resistors 211a and 211b, a temperature compensating resistor 211c, and resistors 213 and 214, a differential amplifier 215 and a transistor 216. The current flowing through the heating resistors 211a and 211b is controlled by the differential amplifier 215 and the transistor 216 so that the potential difference at the center of the bridge may be zero. This configuration controls to keep the resistances of the resistors 211a and 211b constant, namely to keep the resistors at a preset temperature. A signal indicating an air flow rate which is determined by the heating resistors 211a and 211b is fed to a zero-span circuit 2120 which consists of a differential amplifier 2121, and resistors 2122 through 2127.

A direction detection signal Vbi representing the direction of an air flow is obtained by the heating resistors 211a and 211b of the bridge circuit which are placed in parallel along the flow of the air and by a direction detection circuit 2130 consisting of differential amplifiers 2131 and 2141 and resistors 2132 through 2136, 2142, 2143, and 2144.

Said heating resistors 211a and 211b are made of a thin or thick heat generating film of a compound of metal such as platinum, nickel, or tungsten or a poly-silicone resistor on a substrate such as a glass, ceramic, or silicone plate.

For the use of some kinds of heating resistors, the direction detection signal unit 224 outputs two voltage values Vr and Vf whose phases are opposite to each other due to a thermal delay when the air flow changes its direction.

For example, it is possible to feed both ends of the temperature compensating resistor 211c to the analog-to-digital converter 221, to calculate the temperature in the inlet passage, and to use it for temperature compensation of the voltage output Vin or for adjustment of fluctuation of a phase difference due to a temperature change. Similarly, it is possible to convert the voltage output Vin to an air flow rate and change the phase difference according to the air flow rate and the pulsating frequency. This can reduce an influence on the output error by a phase difference easily even when the phase difference changes.

The two voltage outputs Vf and Vr whose phases are opposite to each other are switched in the switch 2170 by a direction signal Vsw which indicates the direction of the air flow and the result is output as a signal Vout which represents the direction of the air flow. This example shows a method of using a digital-to-analog converter 224 and outputting two voltage outputs Vf and Vr whose phases are opposite to each other. However, it can be substituted by a configuration that uses an output from the analog-to-digital converter 224 and another output of the opposite phase from an arithmetic amplifier or the like. It can also be substituted by another configuration which sends two signals (the air-flow rate output value and the direction signal Vsw) to the engine control unit without switching the signals in the switching circuit 2170.

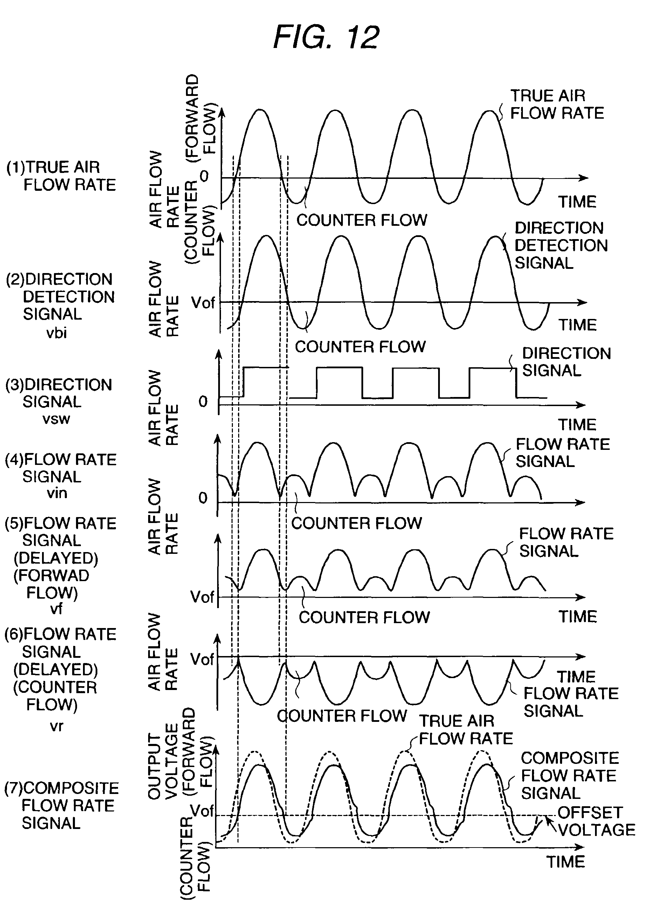

Fig. 12 shows detailed operating waveforms. In the case the true air flow (1) signal is a pulsating waveform containing a counter flow from the engine, the direction detection signal Vbi(2) has a phase difference due to a thermal response delay. The direction signal (3) can be obtained by discriminating the direction detection signal Vbi(2) at a preset level Vof. As the direction detection signal Vbi(2) is basically very low to be sensed, it must be amplified greatly in the direction detection circuit 2130. Consequently, the direction detection signal Vbi(2) is apt to be affected by drifts of the arithmetic amplifier or the like. To solve this problem, it is recommendable to use the output of the zero span circuit which has a high flow-rate sensitivity and a wide dynamic range. Otherwise, the flow-rate signal (4) has a little delay in response to the direction detection signal Vbi. At the same time, this configuration cannot detect the direction of the air flow, the signal for counter flows is also positive. To correct the flow rates, the microcomputer 220 internally processes delays according to the temperature, flow rate and pulsating frequency of the air flow and generates two flow-rate signals Vf (5) and Vr (6) whose phases are opposite to each other with the offset voltage as a reference. These flow-rate signals (5) and (6) are switched by the direction signal Vsw (3) corresponding to the direction of the air flow. With this, a correct flow-rate signal (6) can be obtained.

As this embodiment can particularly change phase differences according to changes of the air-flow temperature, it has an effect to reduce the error in detection of air-flow rates due to phase offsets.

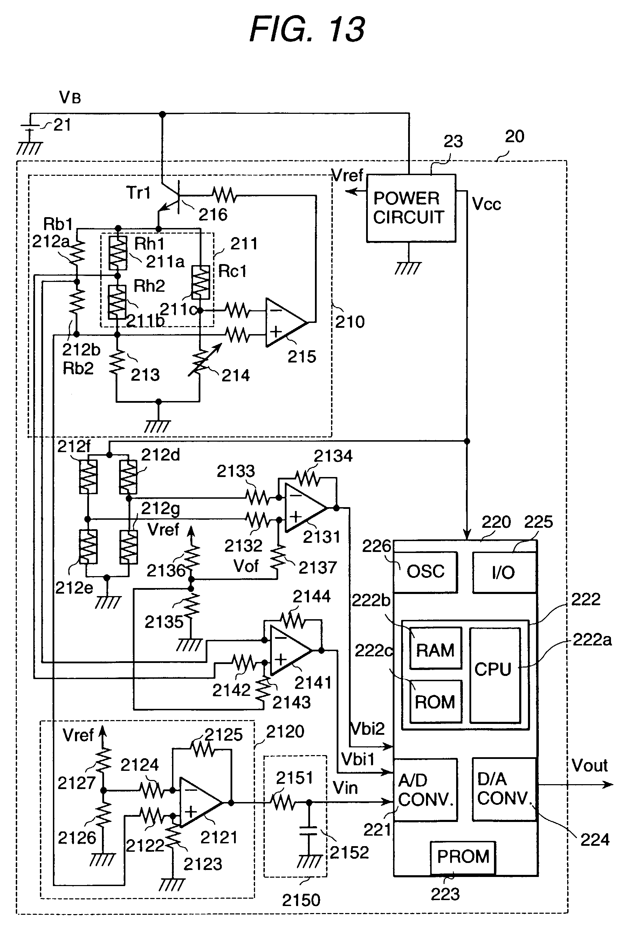

Referring to Fig. 13, below will be explained the details of a fourth embodiment of the present invention. The sensor circuit 210 connected to the power supply 21 outputs a signal proportional to an air flow rate. The sensor circuit 210 consists of a Wheatstone bridge having heating resistors 211a and 211b, a temperature compensating resistor 211c, and resistors 213 and 214, a differential amplifier 215 and a transistor 216. The current flowing through the heating resistors 211a and 211b is controlled by the differential amplifier 215 and the transistor 216 so that the potential difference at the center of the bridge may be zero. This configuration controls to keep the resistances of the resistors 211a and 211b constant, namely to keep the resistors at a preset temperature. A signal indicating an air flow rate which is determined by the heating resistors 211a and 211b is fed to a zero-span circuit 2120 which consists of a differential amplifier 2121, and resistors 2122 through 2127.

A direction detection signal Vbi1 representing the direction of an air flow is obtained by the heating resistors 211a and 211b of the bridge circuit which are placed in parallel along the flow of the air and by a circuit consisting of a differential amplifier 2141 and resistors 2142 through 2144.

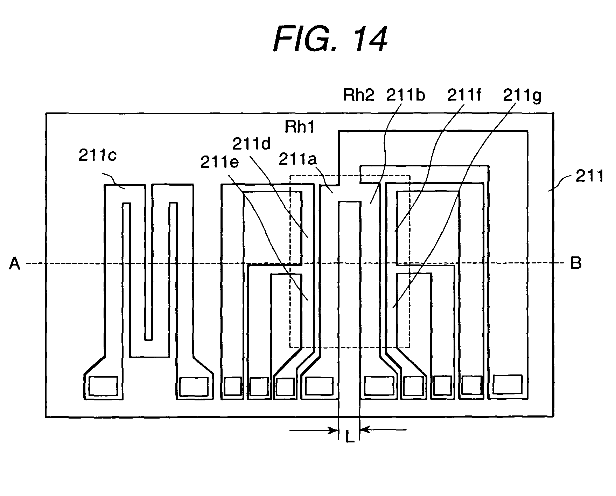

Further, temperature detecting resistors 212d, 212e, 212f, and 212g as a means for obtaining a direction signal are placed on both sides of the heating resistors 211a and 211b which are placed in parallel. The detailed configuration of said circuit is illustrated in Fig. 14. The temperature detecting resistors are placed symmetrically. Particularly, for the use of poly-silicone temperature detecting resistors, resistors of high resistances and high temperature coefficients fit for detection of temperatures can be produced just by varying the concentrations of impurities to be doped. With the characteristics of easily preparing resistors having different resistances, one resistor pattern can contain a plurality of resistors having different temperature coefficients. This characteristics can vary the resistances and temperature coefficients of the heating resistors 211a and 211b and temperature detecting resistors 212d, 212e, 212f, and 212g without increasing the pattern area, which can suppress the cost of manufacturing such resistors. Further this type of resistor patterns have less areas to be etched than patterns of identical resistors using platinum or the like, which increases the reliability.

By using said temperature detecting resistors 212d, 212e, 212f, and 212g in the bridge circuit and driving the circuit by a constant voltage output from a voltage circuit 23, a direction detection signal Vbi2 corresponding to the direction of the air flow together with the circuit consisting of the differential amplifier 2132 and the transistors 2132 through 2137 as well as the aforesaid direction detection signal Vbi1.

Said temperature detecting resistors 212d, 212e, 212f, and 212g can have higher temperature coefficients and have high sensitivity to air flows. Therefore the amplification of the differential amplifier 2132 need not be so high and the signal itself can be used as a flow-rate signal. However, as the sensitivity becomes greater, the output in the high flow-rate area becomes saturated more easily. Therefore the signal is used together with the output of the zero-span circuit 2120 for air velocity signal by said heating resistors 211a and 211b to get an optimum flow rate. However in this case, there arises a phase difference between a signal from the directly-heated resistors 211a and 211b and a signal from a temperature detecting circuit consisting of resistors 212d, 212e, 212f, and 212g which varies indirectly according to the temperature change of the heating resistors 211a and 211b. This phase difference causes an error of measurement. To get a phase-adjusted voltage output Vin, the present invention adds a phase delay circuit 2150 consisting of a resistor 2151 and a capacitor 2152 to the zero-span circuit 2120 for phase adjustment. The output (a phase-adjusted signal) of the phase delay circuit is fed to the microcomputer 220. Namely the microcomputer inputs three signal values and combines them into an optimum signal value, which increases the precision of measurement (from low flow rate to high flow rate). When sampling the analog-to-digital converter 221 in the microcomputer 220, it is possible to use software by giving delay elements to software.

The microcomputer mainly uses the direction detection signal Vbi2 from the temperature detecting resistors 212d, 212e, 212f, and 212g in the low flow-rate area and combines the direction detection signal Vbi1 obtained from signals from the heating resistors 211a and 211b and the voltage output Vin obtained by correcting the phase difference of signals directly from the heating resistors 211a and 211b in the high flow-rate area.

There is another way without using the direction detection signal Vbi1 from the heating resistors 211a and 211b. This method mainly uses a direction detection signal Vbi2 from the temperature detecting resistors 212d, 212e, 212f, and 212g in the low flow-rate area and combines a direction detection signal Vbi2 obtained from signals from the temperature detecting resistors 212d, 212e, 212f, and 212g and a voltage output Vin obtained by correcting the phase difference of signals directly from the heating resistors 211a and 211b in the high flow-rate area. This is enabled by using the direction detection signal Vbi2 obtained from signals from the temperature detecting resistors 212d, 212e, 212f, and 212g which is apt to be saturated for discrimination of a direction signal in the high flow-rate area only.

As the resistors for detection of flow rates and direction of the air flow are duplicated, an optimum signal can always be selected and output even when some of the resistors are stained and deteriorated.

This embodiment using a plurality of direction detectable means can perform high precision flow-rate detection in a wire flow range. The reliability of flow rate detection can be increased by simplifying said direction detectable means.

The heating unit in accordance with the present invention is much simplified to detect both the direction and the flow rate of airflow. It also enables detection of flow-rate and direction even when resistors of low temperature dependence such as poly-silicone resistors are used. The reliability of the flow meter in the present invention is assured by the simple construction of the heating unit and direct detection of temperature differences and heat by a single heater.

**Claims**

1.  A thermal air flow meter consisting of two resistors placed in the inlet air flow to an internal combustion engine and a bridge circuit for controlling the difference between potentials of said two resistors; wherein

    one of said resistors consists of a first resistor (211a) and a second resistor (211b) which is connected in series to said first resistor in said bridge circuit in the downstream side of said air flow and
    an air flow rate signal which is output from said bridge circuit is corrected according to a potential difference between said two resistors.

2.  A thermal air flow meter consisting of two resistors placed in the inlet air flow to an internal combustion engine and a bridge circuit for controlling the difference between voltages of said two resistors; wherein

    said thermal air flow meter further contains a third resistor (211c) which is placed in said inlet air flow independently of said bridge circuit,
    one of said resistors consists of a first resistor (211a) and a second resistor (211b) which is connected in series to said first resistor (211a) in said bridge circuit in the downstream side of said air flow and
    an air flow rate signal which is output from said bridge circuit is corrected according to a potential difference across said first resistor (211a), a potential difference across said second resistor (211b), and a potential difference across said third resistor (211c).

3.  A thermal air flow meter according to claim 1 or claim 2, wherein said air flow rate signal is corrected after phase adjustment.

4.  A thermal air flow meter according to claim 1 or claim 2, wherein

    said first and second resistors (211a, 211b) are made up serially without any break between them.

5.  A thermal air flow meter according to claim 1 or claim 2, wherein

    said air flow rate signal is corrected after its phase is adjusted according to the flow rate.

6.  A thermal air flow meter according to claim 2, wherein

    an air flow rate signal which is output from said bridge circuit is corrected according to the potential difference between said first and second resistors (211a, 211b) and
    the quantity of correction changes according to the flow rate range.

7.  A thermal air flow meter according to claim 1 or claim 2, wherein

    at least one of a signal which detects the direction of said inlet air and said detection voltage value proportional to the flow rate of the inlet air is digitally converted to have a phase difference.

8.  A thermal air flow meter according to claim 1 or claim 2, wherein

    said two resistors are placed in a bypath and a means is provided to eliminate a delay of response of said heater resistor to the flow rate (due to the bypath).

9.  A thermal air flow meter according to claim 1 or claim 2, wherein

    said two resistors are poly-silicone resistors formed on a silicone substrate.

# FIG. 1

# FIG. 2

# FIG. 3

# FIG. 4

ΔTd

ΔTu

L

# FIG. 9

ΔTd1

ΔTu1

ΔTd2

ΔTu2

L

L

(a) IN THE TRANSITION STATUS          (b) IN THE NORMAL STEADY STATUS

# FIG. 5

(1)TRUE AIR
FLOW RATE

AIR FLOW RATE (COUNTER FLOW) / (FORWARD FLOW)

0

TRUE AIR
FLOW RATE

TIME

(2)DIRECTION
DETECTION
SIGNAL

AIR FLOW RATE

Vof

COUNTER FLOW

DIRECTION
DETECTION
SIGNAL

TIME

COUNTER FLOW

(3)DIRECTION
SIGNAL
vbi

AIR FLOW RATE

0

DIRECTION
SIGNAL

TIME

(4)FLOW RATE
SIGNAL
(WITHOUT
A FILTER)

AIR FLOW RATE

0

FLOW RATE
SIGNAL

COUNTER FLOW

TIME

(5)FLOW RATE
SIGNAL
(WITH A FILTER)
vin

AIR FLOW RATE

0

FLOW RATE
SIGNAL

COUNTER FLOW

TRUE AIR
FLOW RATE

TIME

(6)COMPOSITE
FLOW RATE
SIGNAL

OUTPUT VOLTAGE (COUNTER FLOW) / (FORWARD FLOW)

Vof

COMPOSITE
FLOW RATE
SIGNAL

OFFSET
VOLTAGE

TIME

# FIG. 6

## FIG. 7

211c

Rh1

211a

A — — — — — — — — — — — — — — — — — — — — — — — — — B

Rh2

211b

211

L

## FIG. 8

211c          211a        211b

211

# FIG. 10

(1) TRUE AIR
FLOW RATE

AIR FLOW RATE

(FORWARD FLOW)

0

(COUNTER FLOW)

TRUE AIR
FLOW RATE

TIME

COUNTER FLOW

(2) DIRECTION
DETECTION
SIGNAL
vbi

AIR FLOW RATE

Vof

DIRECTION
DETECTION
SIGNAL

TIME

COUNTER FLOW

(3) DIRECTION
SIGNAL

AIR FLOW RATE

0

DIRECTION
SIGNAL

TIME

(4) FLOW RATE
SIGNAL
(WITHOUT
A FILTER)

AIR FLOW RATE

0

FLOW RATE
SIGNAL

COUNTER FLOW

(5) FLOW RATE
SIGNAL
(WITH A FILTER)
vin

AIR FLOW RATE

0

FLOW RATE
SIGNAL

COUNTER FLOW   TRUE AIR
FLOW RATE        TIME

(6) COMPOSITE
FLOW RATE
SIGNAL

OUTPUT VOLTAGE

(FORWARD FLOW)

Vof

(COUNTER FLOW)

COMPOSITE
FLOW RATE
SIGNAL

OFFSET
VOLTAGE

TIME

# FIG. 11

# FIG. 12

(1)TRUE AIR
FLOW RATE

(2)DIRECTION
DETECTION
SIGNAL
vbi

(3)DIRECTION
SIGNAL
vsw

(4)FLOW RATE
SIGNAL
vin

(5)FLOW RATE
SIGNAL
(DELAYED)
(FORWAD
FLOW)
vf

(6)FLOW RATE
SIGNAL
(DELAYED)
(COUNTER
FLOW)
vr

(7)COMPOSITE
FLOW RATE
SIGNAL

# FIG. 13

# FIG. 14